# EUROPEAN PATENT SPECIFICATION

(11) **EP 0 867 899 B1**
(45) Date of publication and mention of the grant of the patent: **18.08.2004**
(21) Application number: 98105424.0
(22) Date of filing: 25.03.1998
(51) Int. Cl.: H01F 38/14, G08C 17/04

(54) **Noncontacting power transfer apparatus**
Kontaktlose Energieübertragungseinrichtung
Dispositif de transfert de puissance sans contact

(30) Priority: 26.03.1997 JP 7413497
(43) Date of publication of application: 30.09.1998
(73) Proprietor: MATSUSHITA ELECTRIC WORKS, LTD., Kadoma-shi Osaka 571 (JP)
(72) Inventor: Tamura, Hideki, Moriyama-shi, Shiga (JP); Yamashita, Mikihiro, Kikone-shi, Shiga (JP); Katsura, Yoshinori, Hikone-shi, Shiga (JP)
(74) Representative: Leson, Thomas Johannes Alois, Dipl.-Ing.

(56) References cited:
- EP-A- 0 540 750
- EP-A- 0 750 323
- US-A- 4 749 993

## Description

### BACKGROUND OF THE DISCLOSURE

### 1. Field of the Invention

The present invention relates to a noncontacting power transfer apparatus for transferring power between a primary winding on the side of a power source device and a secondary winding on the side of a load device in a noncontacting manner by electromagnetic induction.

### 2. Description of the Prior Art

Conventionally, as such a type of noncontacting power transfer apparatus, a circuit configuration as shown in Fig. 13 has been proposed, as described in the unexamined Japanese Patent Application No. 6-311 658, for example. In the noncontacting power transfer apparatus, when a housing of a load device 2 incorporating a secondary winding L3 for power transfer is located at a prescribed position of a housing of a power source device 1 incorporating a primary winding L1 for power transfer, power is transferred from the primary winding L1 for power transfer to the secondary winding L3 for power transfer in a noncontacting manner by electromagnetic induction. Namely, the power is transferred from the power source device 1 to the load device 2.

In the prior art circuit, on the side of the power source device 1, a series circuit is connected across a smoothing capacitor C0, which has an LC resonance circuit of a parallel circuit of a resonance capacitor C1 and the primary winding L₁, a transistor Q: which is a switching element and a resistor R₂; another series circuit having a resistor R₁ and a capacitor C₂ is connected across the smoothing capacitor C₀; a connecting point of the resistor R₁ and the capacitor C₂ is connected to the base of the transistor Q₁ through a feedback winding L₀ magnetically coupled with the primary winding L₁. Incidentally, it should be noted that a commercial power source AC is rectified and smoothed by the diode D₀ and smoothing capacitor C₀.

On the other hand, on the side of the load device 2, a secondary battery E_{B} to be charged is connected to the secondary winding L₃ for power transfer through a diode D₅, the voltage outputted from the secondary winding L₃ is rectified by the diode D₅, and the secondary battery E_{B} is charged by the DC voltage thus rectified.

Incidentally, a load M such as a DC motor is connected to the secondary battery E_{B} through a switch SW₁ which turns on/off by the operation of an operation unit (not shown).

Meanwhile, in such a type of noncontacting power transfer apparatus, where metal such as a coin is erroneously placed on the above predetermined position of the power source device 1, in order to prevent the metal from generating heat, output control from the power source device 1 to the load device 2 is made in such a manner that the presence/absence of the load device 2 is detected and a control signal according to this detection (or signal representative of the kind of the load device 2 and charging state of the secondary battery E_{B}) is transferred to the power source device 1.

More specifically, on the side of the load device 2, in which a primary winding L₄ for signal transfer is connected across the secondary winding L₃ for power transfer, when the voltage across the secondary battery E_{B} reaches a prescribed voltage, a signal is transferred in a noncontacting manner by electromagnetic induction from the primary winding L₄ for signal transfer to the secondary winding L₂ for signal transfer on the side of the power source device. On the side of the power source device 1, the signal received by the secondary winding L₂ for signal transfer is rectified and smoothed by the diode D₁ and capacitor C₃, and the voltage thus rectified/smoothed is applied to the base of the transistor Q₂. Then, a transistor Q₂ turns on so that the base voltage of the transistor Q₁ drops. Thus, the transistor Q₁ turns off to stop oscillation.

In the power source device 1 which has a timer section 11, when a prescribed time of the timer elapses after power turn-on, the transistor Q₂ turns on so that the transistor Q₁ turns off to stop oscillation.

In the above prior art circuit configuration, a power transformer T₁ for power transformer including the primary winding L₁ and the secondary winding L₃ is independent of a single transformer T₂ for control signal transfer including a primary winding L₂ and the secondary winding L₂, so that the respective windings L₁ to L₄ are wound on different cores. For this reason, several cores are required to make the production cost high, and a large space for installing the cores is required to make it difficult to miniaturize the power transfer apparatus. Further, where high power is to be transferred, the transformer T₁ for power transfer is large-scaled which makes it difficult to miniaturize the entire power transfer apparatus. Further, because of more leakage of a magnetic flux, the primary winding L₁ for power transfer and the secondary winding L₂ for signal transfer must be spaced apart from each other by a suitable distance. Correspondingly, the secondary winding L₃ and the primary winding L₄ for signal transfer must be also spaced from each other. This also makes it difficult to miniaturize the entire apparatus and hence the load device 2.

There has another proposal in which both signals with an information signal superposed on a power signal are transferred. This proposal, however, requires a means for superposing the information signal on the power signal and means for extracting only the information signal. This leads to a disadvantage of a complicate circuit configuration. In addition, there is a disadvantage that the level of the information signal varies according to the size (kind) of the load.

Document US 4 749 993 discloses a non-contacting power transfer apparatus as set out in the preamble of claim 1. In particular, this documents proposes an arrangement for a wireless transmission of a measuring signal from a sensor to an evaluating unit by a pair of first electrical coils that are temporarily inductively coupled with one another. The sensor includes a power supply circuit means for receiving a low-frequency energy signal from the second pair of electrical coils and supplies an energy signal to a transmitting oscillator means.

### SUMMARY OF THE INVENTION

The present invention has been accomplished in view of the above circumstance. Its object is to provide a non-contacting power transfer apparatus which can be miniaturized and reduced in production cost.

In order to attain the above object, the present invention provides a non-contacting power transfer apparatus as setout in the independent claim 1. This configuration permits the number of cores to be reduced as compared with the prior art and hence the load device, power source device and the entire apparatus to be miniaturized and reduced in production cost. Since both load device and power source device have only to include a single core, the size of the core can be increased as compared with the prior art, thus permitting higher power to be transferred as compared with the prior art.

The load device preferably includes a switch for stopping oscillation of said second oscillation circuit; said switch being arranged in said second oscillation circuit. In this configuration, the oscillation of the second oscillation circuit can be surely stopped. Therefore, by stopping oscillation when a battery element, for example, has been charged, power from the side of the power source device can be also controlled.

Further, the second oscillation circuit may comprises an LC oscillation circuit and an inductor in said LC oscillation circuit serves as said primary winding for signal transfer. In this configuration, the number of circuit components can be reduced, thus further miniaturizing the power transfer apparatus.

The LC oscillation circuit may include a switch for stopping its oscillation. In this configuration, the oscillation of the LC oscillation circuit can be surely stopped. Therefore, by stopping oscillation when a battery element, for example, has been charged, power from the side of the power source device can be also controlled.

The LC oscillation circuit can be designed in a configuration of a series resonance circuit, and a switch for stopping oscillation of said LC oscillation circuit is inserted between said LC oscillation circuit and ground. In this configuration, the oscillation of the LC oscillation circuit can be surely stopped. Therefore, by stopping oscillation when a battery element, for example, has been charged, power from the side of the power source device can be also controlled.

Further, the resonance frequency of said secondary winding for signal transfer and the oscillation frequency of said LC oscillation circuit are preferably set to be different from each other. This configuration is a preferred embodiment of the present invention.

Furthermore, a diode may be inserted between a collector of a transistor for driving said LC oscillation circuit and said inductor. This configuration prevents the collector potential of the driving transistor from becoming a negative potential, thus realizing continuous oscillation.

Still further, a rising RC time constant of a base potential of the transistor for driving said LC oscillation circuit can be set to be sufficiently shorter than the period of oscillation of said second oscillation circuit. In this configuration, the base potential when the driving transistor turns on after it has turned off rises fast, thus lengthening the period while the LC oscillation circuit oscillates.

### BRIEF DESCRIPTION OF THE DRAWINGS

In the accompanying drawings:
Fig. 1 is a circuit diagram showing a first embodiment according to the present invention;
Fig. 2 is the schematic arrangement view of the main part of the circuit in Fig. 1;
Figs. 3(a) and 3(b) are graphs for explaining the intermittent operation of the circuit in Fig. 1;
Figs. 4(a) and 4(b) are other graphs for explaining the continuous operation of the circuit in Fig. 1;
Fig. 5 is a circuit diagram showing a second embodiment according to the present invention;
Fig. 6 is a circuit diagram of the main part showing a third embodiment according to the present invention;
Fig. 7 is a diagram showing a configuration of the oscillation circuit in Fig. 6;
Fig. 8 is a circuit diagram of the main part showing a fourth embodiment according to the present invention;
Figs. 9(a) and 9(b) are graphs for explaining the operation of the circuit according to the present invention;
Fig. 10 is a circuit diagram of the main part showing a fifth embodiment according to the present invention;
Fig. 11 is a comparative graph for explaining the operation of the circuit;
Fig. 12 is another graph for explaining the operation of the above circuit according to the fifth embodiment; and
Fig. 13 is a circuit diagram of a prior art.

### DETAILED DESCRIPTION OF THE PREFERRED EMBODIMENTS

### Embodiment 1

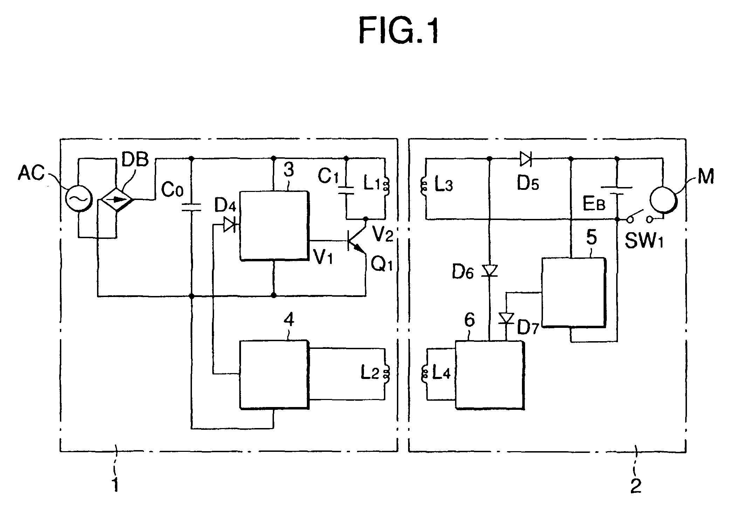

Fig. 1 shows a circuit diagram of a noncontacting power transfer apparatus according to this embodiment.

A power source device 1 rectifies and smooths a commercial power source AC through a diode bridge D_{B} and a capacitor C₀. A series circuit (oscillation circuit) of an LC resonance circuit, which includes a resonance capacitor C₁ and a primary winding L₁, and a transistor Q₁ serving as a switching element are connected across the smoothing capacitor C₀. Further, a driving control circuit 3, which on/off controls the transistor Q₁ to adjust the power to be transferred from the primary winding L₁ for power transfer to a secondary winding L₃ for power transfer on the side of a load device 2, is connected across the smoothing capacitor C₀.

On the other hand, in the load device 2, the secondary winding L₃ is magnetically coupled with the primary winding L₁ for power transfer to produce a secondary output and a secondary battery E_{B} which is a charging battery is connected across the secondary winding L₃ for power transfer through a diode D₅ so that the secondary battery E₃ is charged by the secondary output. To the secondary battery E_{B}, a load M such as a DC motor is connected through a switch SW₁ which is turned on/off by operating an operation unit (not shown).

Further, on the side of the load device 2, an oscillation circuit 6 and a primary winding L₄ are connected across the secondary winding L₃ for power transfer through a diode D₆. The load device 2 includes a control circuit 5 which serves to detect the voltage across the secondary battery E_{B} and produce a signal for stopping the oscillation of the oscillation circuit 6 when the voltage reaches a prescribed value.

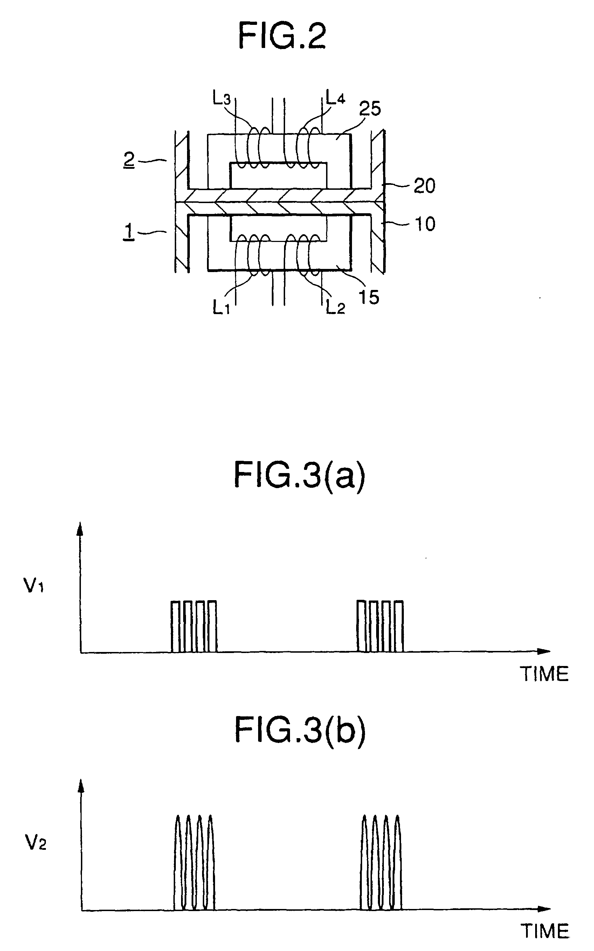

In this embodiment, as seen in Fig. 2, the primary winding L₁ for power transfer and the secondary winding L₂ for signal transfer included in the housing 10 of the power source device 1 are wound on a single C-shape core 15 whereas the secondary winding L₃ for power transfer and primary winding L₄ for signal transfer included in the housing 20 of the load device 2 are wound on a single C-shape core 25. For this reason, as compared with the prior art in which the transformer for power transfer and the transformer for signal transfer are provided individually, the number of cores can be reduced, thereby miniaturizing the power source 1 and load device 2 and reducing their production cost. In short, the noncontacting power transfer apparatus can be miniaturized and reduced in production cost. Since the number of cores can be reduced, the size of the core can be increased as compared with the prior art, and large power can be transferred from the power source device 1 to the load device 2 without large-scaling the power transfer apparatus as compared with the prior art.

An explanation will be given of the operation of the noncontacting power transfer apparatus according to the present invention.

When power is turned on, the driving control circuit 3 produces a voltage V₁ as shown in Fig. 3(a), and intermittently drives the transistor Q₁. When the transistor Q₁ turns on, in the power source device 1, oscillation is started by an LC resonance circuit including the primary winding L₁ for power transfer and the resonance capacitor C₁. Then, the voltage V₂ at the LC resonance circuit and the collector of the transistor Q₁ is such as shown in Fig. 3(b).

When the housing 20 of the load device 2 is located at a predetermined position of the housing 10 of the power source device 1, in the load device 2, the secondary winding L₃ for power transfer is magnetically coupled with the primary winding L₁ for power transfer so that a voltage is induced in the secondary winding L₃ for power transfer. The voltage is rectified by the diode D₅ and the DC voltage thus rectified charges the secondary battery E_{B}. The voltage induced in the secondary winding L₃ for power transfer is applied to the oscillation circuit 6 through the diode D₆. An oscillation occurs in the oscillation circuit 6 so that a signal is transferred from the primary winding L₄ for signal transfer to the secondary winding L₂ by electromagnetic induction in a noncontacting manner. Assuming that the oscillation frequency on the side of the power source device is f₁ (e.g. 50 kHz), and the oscillation circuit 6 on the side of the load device 2 is f₂ (e.g. 1 MHz), the voltage generated in the secondary winding L₂ for signal transfer includes the component of the frequency f₁ and that of the frequency f₂ which are superposed on each other.

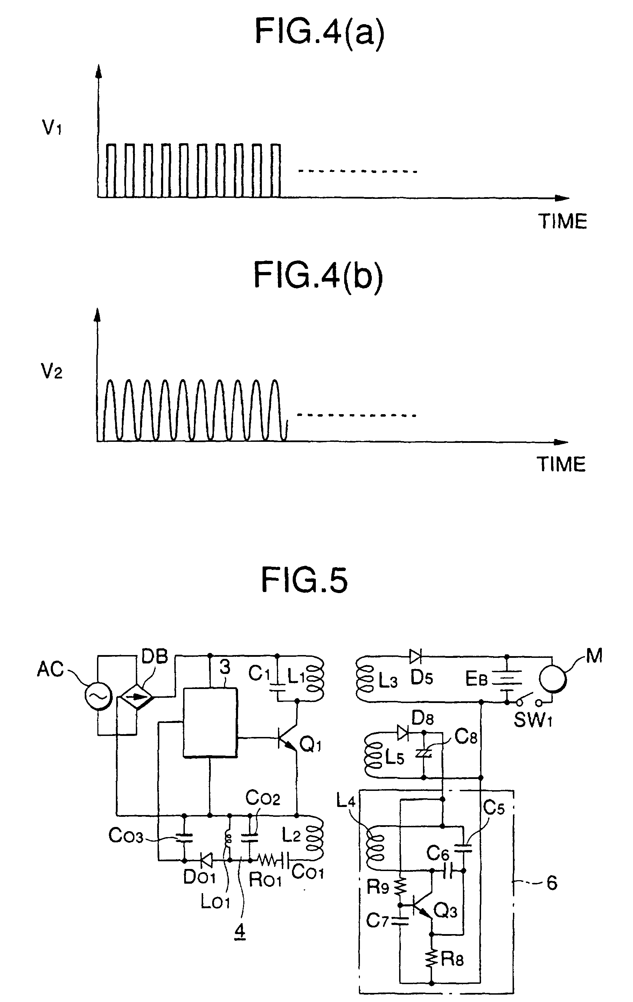

In the power source device 1, only the signal having the frequency f₂ is extracted from the voltage generated in the secondary winding L₂ for signal transfer by the filter circuit 4. The signal thus extracted is supplied to the driving control circuit 3 through the diode D₄. In response to this signal, the driving control circuit 3 falls in continuous driving to produce a voltage V1 as shown in Fig. 4(a). Then, the voltage V₂ at the connecting point of the above LC resonance circuit and transistor Q₁ provide a voltage as shown in Fig. 4(b), thereby transferring prescribed power to the load device 2. In other words, the driving control circuit 3 provides intermittent driving before the load device 2 is set in the power source device 1 (see Fig. 3(a)). After the load device 3 is set, the driving control circuit 3 falls in continuous driving (see Fig. 4(a)).

Thereafter, when the control circuit 5 detects that the voltage of the secondary battery E_{B} on the side of the load device 2 has reached a prescribed voltage, oscillation of the oscillation circuit 6 is stopped by the control circuit 5 so that the driving control circuit 3 returns to the intermittent driving as shown in Fig. 3(a). In short, where the load device 2 is not set in the power source device 1, and after the secondary battery E_{B} has been charged, the driving control circuit 3 performs intermittent driving, thereby permitting power consumption to be saved.

In this embodiment, since the oscillation frequencies f₁ and f₂ are made different, power can be transferred from the power source device 1 to the load device 2 and the signal can be transferred from the load device 2 to the power source device 1. Thus, the power/signal transfer transformer having of windings L₁ to L₄ can be miniaturized, and the entire power transfer apparatus can be miniaturized.

### Embodiment 2

Fig. 5 is a circuit diagram of a noncontacting power transfer apparatus according to this embodiment.

The basic circuit configuration and basic operation according to this embodiment is substantially the same as embodiment 1. The oscillation circuit 6 on the side of the load device 2 is constructed as a Colpitts oscillation circuit, and the inductor of the Colpitts oscillation circuit wound on the core 25 (see Fig. 2) on the side of the load device 2 serves as the primary winding L₄ for signal transfer in the first embodiment. The remaining structure, which is the same as the first embodiment, will not be explained here.

Reference symbol E_{B} in Fig. 5 denotes a secondary battery serving as a charging element. Reference symbol SW₁ denotes a switch which turns on/off according to the operation of an operation unit (not shown). A filter circuit 4 has an inductor L₀₁, a diode D₀₁, a capacitor C₀₁, C₀₂ and C₀₃, a resistor R₀₁, etc. Reference symbol L₅ denotes a power winding for the Colpitts oscillation circuit.

Thus, in this embodiment, since the oscillation is constructed as a Colpitts oscillation circuit, the circuit configuration of the oscillation circuit 6 can be simplified and the inductor of the Colpitts oscillation circuit serves as the primary winding L₄ for signal transfer. Thus, the number of components can be reduced, thereby realizing miniaturization and low costing.

### Embodiment 3

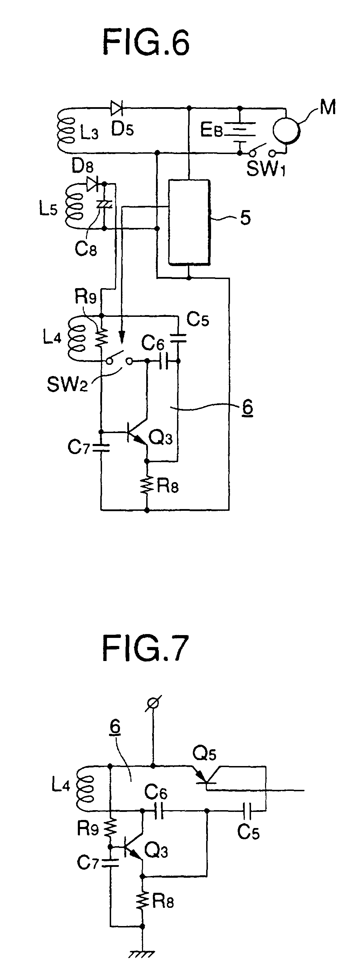

The noncontacting power transfer apparatus according to this embodiment is designed in such a circuit configuration as shown in Fig. 6 on the side of the load device 2. The configuration on the side of the power source device 1 is the same as in the first and second embodiments.

Meanwhile, in order stop the Colpitts oscillation of the oscillation circuit 6, the base potential of the transistor Q₃ may be lowered to the ground level. However, in the second embodiment, the inductor of the Colpitts oscillation circuit serves as the primary winding L₄ so that the frequency of power to be transferred from the power source device 1 to the load device 2 is carried on the primary winding L₄ for signal transfer. For this reason, even if the base potential of the transistor Q₃ is lowered to the ground level, the resonance circuit including the primary winding L₄ for signal transfer and the capacitors C₅, C₆ is in a state where energy is always supplied thereto so that the oscillation in the resonance cannot be stopped.

On the other hand, in this embodiment, as shown in Fig. 6, a switch SW₂ for stopping oscillation is inserted within the resonance circuit including the primary winding L₄ and the capacitors C₅, C₆. For this reason, when the voltage across the secondary battery E_{B} which is a charging element, by switching off the switch SW₂ through the control circuit 5, the oscillation of the resonance circuit can be stopped completely.

Incidentally, the switch SW₂ may be an pnp-type transistor Q₅ as shown in Fig. 7. The base voltage of the pnp-type transistor Q₅ may be controlled by the control circuit 5.

### Embodiment 4

Meanwhile, the oscillation in the resonance circuit can be surely stopped by providing the switch SW₂ within the resonance circuit of the oscillation circuit 6 like the third embodiment. However, as shown in Fig. 7, use of the pnp transistor Q₅ serving as the switch SW₂ increases the production cost.

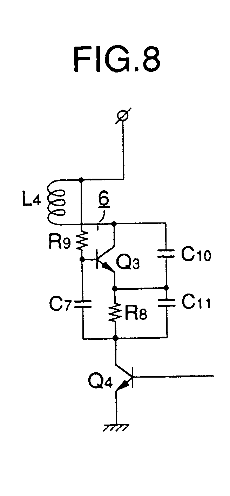

On the other hand, in this embodiment, the oscillation circuit 6 is designed as the Colpitts oscillation circuit having a series resonance circuit structure as shown in Fig. 8, and the switching element Q₄ is provided between the ground and the resistor R₆ connected to the emitter of the npn-type transistor Q₃ in the oscillation circuit 6. In this case, the switching element Q₄ is designed to be turned on/off by the signal supplied from the control circuit 5 to the base. Thus, this embodiment can realize the low costing as compared with the case where the oscillation circuit 6 having the parallel resonance circuit structure is provided with the pnp-type transistor Q₅ as shown in Fig. 7.

The structure of the power source device 1 and that of the other component than the oscillation circuit 6, which are the same as in the second embodiment, are not shown in the drawing and illustrated.

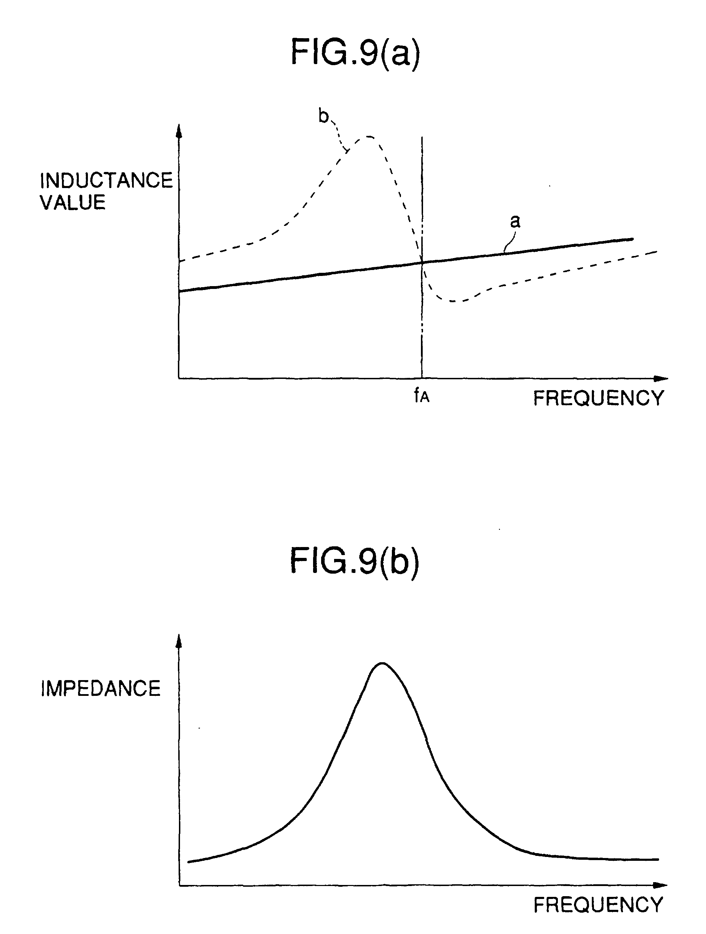

Meanwhile, in this embodiment, second embodiment and third embodiment, the inductor of the Colpitts oscillation circuit which operates as the oscillation circuit 6 serves as the primary winding L₄. For this reason, when the housing 20 of the load device 2 is located at a predetermined position of the housing 10, the inductance value of the above inductor (primary winding L₄ for signal transfer) is changed under the influence of the transformer on the power side constituted by the primary winding L₁ for power transfer and secondary winding L₂ for signal transfer. The inductance value also depends on the frequency. Fig. 9(a) shows changes in the inductance value of the inductor.

Specifically, the inductance value of the above inductance varies as indicated in solid line a in Fig. 9(a) when the power source device 1 and the load device 2 are separated with each other. On the other hand, when the housing 20 of the load device 2 is set at a predetermined position of the housing 10, the inductance value varies as indicated by broken line b in Fig. 9(a) so that the inductance value changes in the neighborhood of frequency f_{A} greatly. The frequency f_{A} is substantially equal to the resonance frequency defined by the primary winding L₁ for power transfer or secondary winding L₂ for signal transfer and a floating capacitor between the windings L₁ and L₂. Fig. 9(b) shows the frequency characteristic of the impedance of the secondary winding L₂.

Assuming that the oscillation frequency of the Colpitts oscillation circuit is equal to, for example, a frequency f_{A}, where the capacitance of the capacitor constituting the Colpitts oscillation circuit fluctuates, the oscillation frequency when the housing 20 of the load device 2 is located at the predetermined position of the housing 10 of the power source device 1 varies greatly. Where the frequency higher than the frequency f_{A}, the inductance value decreases so that the oscillation frequency is shifted to a higher frequency. Inversely, if it is lower than the frequency f_{A}, the inductance value increases so that the oscillation frequency is shifted to a lower frequency. Further, in the power source device 1, since the filter circuit 4 must extract or separate the signal from the load device 2, the oscillation frequency of the Colpitts oscillation circuit must be shifted from the above resonance frequency.

Since the second winding L₂ for signal transfer is most susceptible to the signal from the primary winding L₄ at the above resonance frequency, it is desired that the oscillation frequency of the Colpitts oscillation circuit is not shifted from the above resonance frequency so greatly.

### Embodiment 5

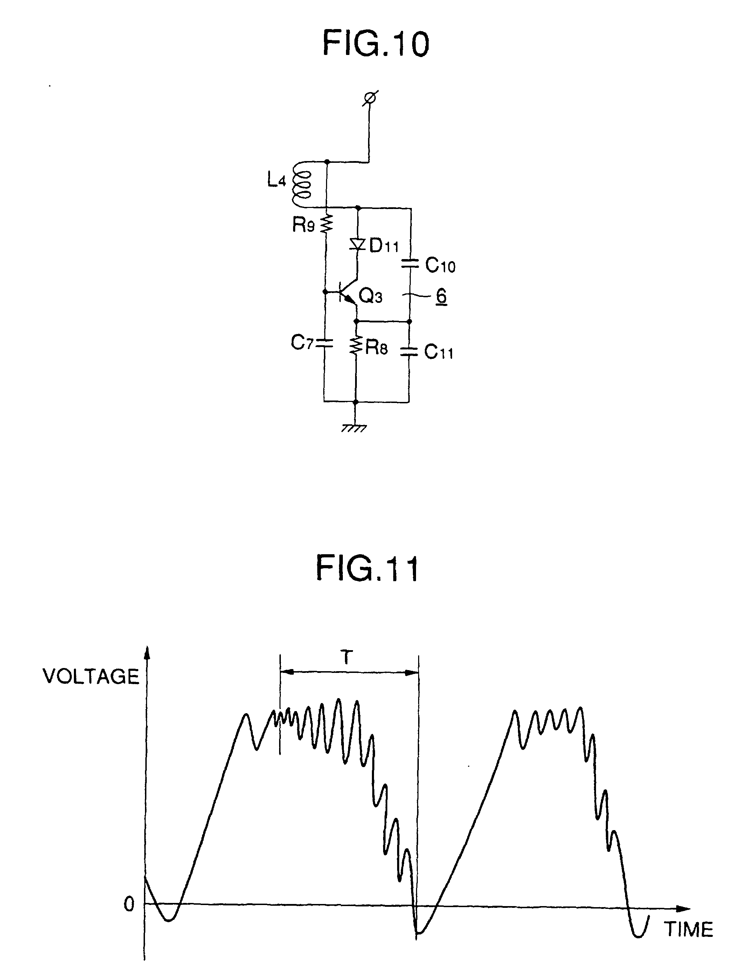

The basic configuration of this embodiment is substantially the same as that of the fourth embodiment, but different from the fourth embodiment in only that as shown in Fig. 10, a diode D11 is inserted between the one end of the primary winding L₄ for signal transfer and the collector of the driving transistor Q₃ of the oscillation circuit 6. Only the difference will be explained.

Fig. 11 shows the waveform of the collector potential of the driving transistor Q₃ when the diode D₁₁ is not inserted. As seen from Fig. 11, the collector potential of the driving transistor Q₃ drops to the value not higher than the ground level for each period. This is attributable to the influence of the frequency (resonance frequency defined by the primary winding L₁ for power transfer and the resonance capacitor C₁) used to transfer the power by electromagnetic induction from the power source device 1 to the load device 2.

Therefore, while the collector potential of the driving transistor Q₃ is not higher than the ground level, a current flows from the base of the driving transistor Q₃ to the collector so that the base potential reaches a negative potential. Then, the operation of the driving transistor Q₃ stops. Thereafter, even when the collector potential boosts, the base potential increases gradually by the RC time constant defined by the resistor R₃ and capacitor C₇ so that the turn-on of the driving transistor Q₃ is retarded. Thus, the Colpitts oscillation occurs only during the period T shown in Fig. 11.

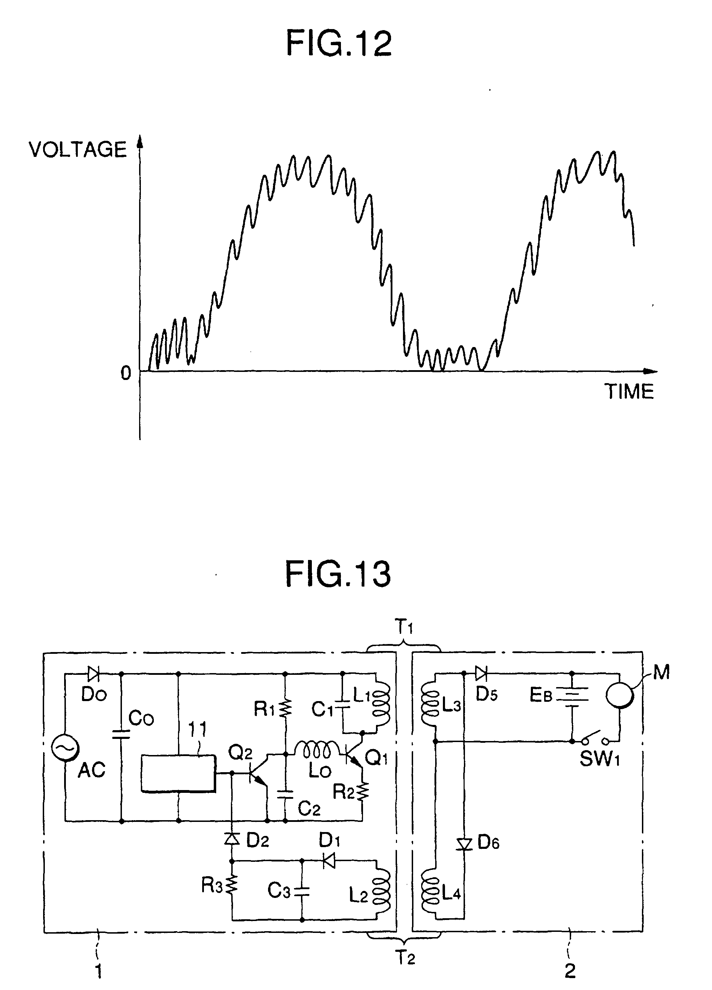

On the other hand, in this embodiment, since the above diode D₁₁ is inserted, the collector potential of the driving transistor Q₃ is as shown in Fig. 12 in which the collector potential does not reach the negative potential. Thus, the Colpitts oscillation occurs continuously. Accordingly, in accordance with this embodiment, the signal from the load device 2 can be transferred to the power source device 1.

### Embodiment 6

In this embodiment, the diode D11is not inserted, but the one end of the primary winding L₄ is directly connected to the collector of the driving transistor Q₃ in the oscillation circuit according to the fifth embodiment. In this case, the capacitance of the capacitor C₇ and the resistance of the resistor R₃ are set suitably so that the oscillation period of the oscillation circuit is sufficiently shorter than that the oscillation period (which is defined by the resonance frequency of the resonance circuit including the primary capacitor L₁ for power transfer and the resonance capacitor C₁) in the power source device 1.

In this way, since the RC time constant defined by the capacitance of the capacitor C₇ and the resistance of the resistor R₉ is small, even when the collector potential of the driving transistor Q₃ drops to the value not higher than the ground level as seen from the voltage waveform shown in Fig. 11, so that the transistor Q₃ is turned off, the base potential boosts quickly, thereby permitting the Colpitts oscillation circuit to be sufficiently oscillated. Incidentally, if the RC time constant is too large, the driving transistor Q₃ cannot turn on entirely.

A power source device 1, when a load device is set at a predetermined position, transfers power in a noncontacting manner by electromagnetic induction from a primary winding L₁ for power transfer to a secondary winding L₃ for power transfer. In the load device 2, a secondary battery E_{B} is charged by the secondary output of the secondary winding L₃ for power transfer. When the load device 2, when the secondary output of the secondary winding L₃ is produced, transfers a signal from a primary winding L₄ for signal transfer to a secondary winding L₂ for signal transfer in a noncontacting manner by electromagnetic induction. A driving control circuit 3, when receiving the output from the secondary winding L₂ for signal transfer through a filter circuit 4, changes a transistor Q₁ from intermittent driving to continuous driving. The primary winding L₁ for power transfer and the secondary winding L₂ for signal transfer are wound on a single C-shape core, whereas the secondary winding L₃ for power transfer and primary winding L₄ for signal transfer are wound on another single C-shape core 25.

## Claims

1. A non-contacting power transfer apparatus for transferring power from a primary winding (**L**_{**1**}**)** for power transfer to a secondary winding (**L**_{**3**}) for power transfer in a non-contacting manner by electromagnetic induction, comprising:
a power source device (**1**) including a first oscillation circuit (**L**_{**1**}**, C**_{**1**}) having said primary winding for power transfer and oscillating at a first oscillation frequency (**f**_{**1**}), a secondary winding (**L**_{**2**}) for signal transfer, and a filter circuit (**4**) connected to said secondary winding for signal transfer for extracting a signal induced in said secondary winding for signal transfer, and
a load device (**2**) including said secondary winding (**L**_{**3**}) for power transfer magnetically coupled with said primary winding (**L**_{**1**}) for power transfer in a state where the load device is arranged at a predetermined position of said power source device, a second oscillation circuit (**6**) oscillating (**f**_{**2**}) on the basis of an output from said secondary winding (**L**_{**3**}) for power transfer, and a primary winding (**L**_{**4**}) for signal transfer connected to said second oscillation circuit (**6**) and magnetically coupled with said secondary winding for signal transfer in said state so as to transfer the signal which indicates a state where the load device is arranged at a predetermined position of said power source device, to said secondary winding (**L**_{**2**}) for signal transfer,
**characterized in that**
said power source device (**1**) comprises a driving control circuit (**3**) for controlling oscillation in said first oscillation circuit such that when said driving control circuit does not receive the signal from said filter circuit, said first oscillation circuit oscillates intermittently, and when said driving control circuit receives the signal from said filter circuit, said first oscillation circuit oscillates continuously;
wherein said first oscillation circuit and said second oscillation circuit are designed to have different oscillation frequencies (**f**_{**1**}**, f**_{**2**})
wherein said primary winding (**L**_{**1**}) for power transfer and said secondary windin (**L**_{**2**}) for signal transfer are wound on a core (**15**) whereas said secondary winding (**L**_{**3**}) for power transfer and said primary winding (**L**_{**4**}) for signal transfer are wound on another core (**25**).

2. The non-contacting power transfer apparatus according to claim 1, **characterized by** further comprising a switch (**SW**_{**2**}; **Q**_{**5**}) for stopping oscillation of said second oscillation circuit (**6**)**,** said switch being arranged in said second oscillation circuit.

3. The non-contacting power transfer apparatus according to claim 1, **characterized in that** said second oscillation circuit (**6**) comprises an LC oscillation circuit (**L**_{**4**}**, C**_{**5**}**, C**_{**6**}) and an inductor (**L**_{**4**}) in said LC oscillation circuit serves as said primary winding for signal transfer.

4. The non-contacting power transfer apparatus according to claim 3, **characterized in that** said LC oscillation circuit includes a switch (**SW**_{**2**}) for stopping its oscillation.

5. The non-contacting power transfer apparatus according to claim 3, **characterized in that** said LC oscillation circuit is designed in a configuration of a series resonance circuit, and the switch for stopping oscillation of said LC oscillation circuit is inserted between said LC oscillation circuit and ground.

6. The non-contacting power transfer apparatus according to any one of claims 3 to 5, **characterized in that** a resonance frequency of said secondary winding for signal transfer and the oscillation frequency of said LC oscillation circuit are set to be different from each other.

7. The non-contacting power transfer apparatus according to claim 3, **characterized by** further comprising a diode (**D**_{**11**}) inserted between a collector of a transistor (**Q**_{**3**}) for driving said LC oscillation circuit and said inductor (**L**_{**4**}).

8. The non-contacting power transfer apparatus according to claim 3, **characterized in that** a rising RC time constant of a base potential of a transistor (**Q**_{**3**}) for driving said LC oscillation circuit is set to be sufficiently shorter than a period of oscillation of said second oscillation circuit.

9. The non-contacting power transfer apparatus according to claim 1, **characterized in that** said first oscillation circuit intermittently and periodically is driven on the basis of absence of an output from the secondary winding for signal transfer.

## Patentansprüche

1. Kontaktlose Energieübertragungseinrichtung zur kontaktlosen Energieübertragung von einer Energieübertragungs-Primärwicklung (L₁) zu einer Energieübertragungs-Sekundärwicklung (L₃) durch elektromagnetische Induktion, mit
einer Stromquelleneinrichtung (1), die einen ersten Schwingkreis (L₁, C₁), der die Energieübertragungs-Primärwicklung umfasst und mit einer ersten Schwingfrequenz (f₁) schwingt, eine Signalübertragungs-Sekundärwicklung (L₂) und eine mit der Signalübertragungs-Sekundärwicklung zur Ableitung eines in der Signalübertragungs-Sekundärwicklung induzierten Signals verbundene Filterschaltung (4) umfasst, und
einer Verbrauchereinrichtung (2), die die Energieübertragungs-Sekundärwicklung (L₃), die in einem Zustand, bei dem die Verbrauchereinrichtung in einer vorgegebenen Stellung an der Stromquelleneinrichtung angeordnet ist, magnetisch mit der Energieübertragungs-Primärwicklung (L₁) gekoppelt ist, einen zweiten Schwingkreis (6), der auf der Basis des Ausgangssignals der Energieübertragungs-Sekundärwicklung (L₃) in Schwingungen (f₂) versetzt wird, und eine mit dem zweiten Schwingkreis (6) verbundene Signalübertragungs-Primärwicklung (L₄) umfasst, die in diesem Zustand mit der Signalübertragungs-Sekundärwicklung (L₂) magnetisch gekoppelt ist, um der Signalübertragungs-Sekundärwicklung (L₂) ein Signal zu übermitteln, das einen Zustand bezeichnet, bei dem die Verbrauchereinrichtung in einer vorgegebenen Stellung an der Stromquelleneinrichtung angeordnet ist,
**dadurch gekennzeichnet, dass**
die Stromquelleneinrichtung (1) eine Ansteuerschaltung (3) aufweist, die die Schwingung des ersten Schwingkreises derart steuert, dass bei Nichtanstehen des Signals der Filterschaltung an der Ansteuerschaltung der erste Schwingkreis intermittierend schwingt und bei Anstehen des Signals der Filterschaltung an der Ansteuerschaltung der erste Schwingkreis kontinuierlich schwingt,
der erste Schwingkreis und der zweite Schwingkreis unterschiedliche Schwingfrequenzen (f₁ > f₂) aufweisen, und
die Energieübertragungs-Primärwicklung (L₁) und die Signalübertragungs-Sekundärwicklung (L₂) auf einen Kern (15) gewickelt sind, während die Energieübertragungs-Sekundärwicklung (L₃) und die Signalübertragungs-Primärwicklung (L₄) auf einen anderen Kern (25) gewickelt sind.

2. Kontaktlose Energieübertragungseinrichtung nach Anspruch 1, **gekennzeichnet durch** einen in dem zweiten Schwingkreis (6) angeordneten Schalter (SW₂; Q₅) zur Unterbrechung der Schwingung des zweiten Schwingkreises (6).

3. Kontaktlose Energieübertragungseinrichtung nach Anspruch 1, **dadurch gekennzeichnet, dass** der zweite Schwingkreis (6) einen LC-Schwingkreis (L₄, C₅, C₆) umfasst und dass eine Induktionsspule (L₄) des LC-Schwingkreises die Signalübertragungs-Primärwicklung bildet.

4. Kontaktlose Energieübertragungseinrichtung nach Anspruch 3, **dadurch gekennzeichnet, dass** der LC-Schwingkreis einen Schalter (SW₂) zur Unterbrechung seiner Schwingung aufweist.

5. Kontaktlose Energieübertragungseinrichtung nach Anspruch 3, **dadurch gekennzeichnet, dass** der LC-Schwingkreis als Reihenschwingkreis ausgestaltet ist und dass der Schalter zur Unterbrechung der Schwingung des LC-Schwingkreises zwischen den LC-Schwingkreis und Masse geschaltet ist.

6. Kontaktlose Energieübertragungseinrichtung nach zumindest einem der Ansprüche 3 bis 5, **dadurch gekennzeichnet, dass** die Resonanzfrequenz der Signalübertragungs-Sekundärwicklung und die Schwingfrequenz des LC-Schwingkreises auf unterschiedliche Werte eingestellt sind.

7. Kontaktlose Energieübertragungseinrichtung nach Anspruch 3, **gekennzeichnet durch** eine Diode (D₁₁), die zwischen den Kollektor eines Transistors (Q₃) zur Ansteuerung des LC-Schwingkreises und die Induktionsspule (L₄) geschaltet ist.

8. Kontaktlose Energieübertragungseinrichtung nach Anspruch 3, **dadurch gekennzeichnet, dass** eine RC-Anstiegszeitkonstante des Basispotentials eines Transistors (Q₃) zur Ansteuerung des LC-Schwingkreises ausreichend kürzer als die Schwingungsperiode des zweiten Schwingkreises eingestellt ist.

9. Kontaktlose Energieübertragungseinrichtung nach Anspruch 1, **dadurch gekennzeichnet, dass** der erste Schwingkreis bei Nichtanstehen eines Ausgangssignals der Signalübertragungs-Sekundärwicklung intermittierend und periodisch angesteuert wird.

## Revendications

1. Dispositif de transfert d'énergie sans contact pour transférer l'énergie d'un enroulement primaire (L₁) de transfert d'énergie à un enroulement secondaire (L₃) de transfert d'énergie de manière sans contact par induction électromagnétique, comprenant :
Un dispositif de source d'énergie (1) incluant un premier circuit d'oscillation (L₁, C₁) présentant ledit enroulement primaire de transfert d'énergie et oscillant à une première fréquence d'oscillation (f₁), un enroulement secondaire (L₂) de transfert de signaux, et un circuit de filtrage (4) connecté audit enroulement secondaire de transfert de signaux pour l'extraction d'un signal induit dans ledit enroulement secondaire de transfert de signal et
Un dispositif de charge (2) incluant ledit enroulement secondaire (L₃) de transfert de puissance accouplé magnétiquement audit enroulement secondaire (L₁) de transfert de puissance dans un état où le dispositif de charge est disposé à une position prédéterminée dudit dispositif de source d'énergie, un second circuit d'oscillation (6) oscillant (f₂) sur la base d'une sortie dudit enroulement secondaire (L₃) de transfert d'énergie, et un enroulement primaire (L₄) de transfert de signal connecté audit second circuit d'oscillation (6) et accouplé magnétiquement audit enroulement secondaire de signal de transfert dans ledit état de manière à transférer le signal qui indique un état où le dispositif de charge est disposé à une position prédéterminée de ladite source d'énergie au dit enroulement secondaire (L₂) de transfert de signal, **caractérisé en ce que**
ledit dispositif de source d'énergie (1) comprend un circuit de contrôle conducteur (3) pour contrôler l'oscillation dans ledit dit premier circuit d'oscillation de sorte que ledit circuit de contrôle conducteur ne reçoit pas le signal dudit circuit de filtrage, ledit circuit d'oscillation oscille par intermittence et quand ledit circuit de commande conducteur reçoit le signal dudit circuit de filtrage, ledit premier circuit d'oscillation oscille continuellement,
ledit premier circuit d'oscillation et ledit second circuit d'oscillation étant conçus pour avoir des fréquences d'oscillation différentes (f₁, f₂),
ledit premier enroulement primaire (L₁) de transfert d'énergie et ledit enroulement secondaire (L₂) de transfert de signaux étant enroulés sur un noyau (15) de sorte que ledit enroulement secondaire (L₃) de transfert d'énergie et ledit enroulement primaire (L₄) de transfert de signaux étant enroulé sur un autre noyau (25).

2. Dispositif de transfert d'énergie sans contact selon la revendication 1, **caractérisé** en comprenant en outre un commutateur (SW₂; Q₅) pour arrêter l'oscillation dudit second circuit d'oscillation (6), ledit commutateur étant disposé dans ledit second circuit d'oscillation.

3. Dispositif de transfert d'énergie sans contact selon la revendication 1, **caractérisé en ce que** ledit second circuit d'oscillation (6) comprend un circuit d'oscillation LC (L₄, C₅, C₆) et **en ce qu'**un inducteur (L₄) dans ledit circuit d'oscillation LC sert de dit enroulement primaire de transfert de signaux.

4. Dispositif de transfert d'énergie sans contact selon la revendication 3, **caractérisé en ce que** ledit circuit d'oscillation LC comprend un commutateur (SW₂) pour stopper son oscillation.

5. Dispositif de transfert d'énergie sans contact selon la revendication 1, **caractérisé en ce que** ledit circuit d'oscillation LC est conçu dans une configuration d'une série de circuit de résonance et le commutateur pour stopper l'oscillation dudit circuit d'oscillation LC est inséré entre ledit circuit d'oscillation LC et le sol.

6. Dispositif de transfert d'énergie sans contact selon l'une quelconque des revendications 3 à 5, **caractérisé en ce qu'**une fréquence de résonance dudit second enroulement de transfert de signaux et la fréquence dudit circuit d'oscillation sont réglées pour être différentes l'une de l'autre.

7. Dispositif de transfert d'énergie sans contact selon la revendication 3, **caractérisé en outre par** une diode (D₁₁) insérée entre un collecteur d'un transistor (Q₃) pour piloter ledit circuit d'oscillation LC et ledit inducteur (L₁).

8. Dispositif de transfert d'énergie sans contact selon la revendication 3, **caractérisé en ce qu'**une constante de temps croissante RC d'un potentiel de base d'un transistor (Q₃) pour piloter ledit circuit d'oscillation LC est réglé pour être suffisamment plus courte qu'une période d'oscillation dudit second circuit d'oscillation.

9. Dispositif de transfert d'énergie sans contact selon la revendication 1, **caractérisé en ce que** ledit premier circuit d'oscillation est entraîne par intermittence et périodiquement sur la base de l'absence d'une sortie provenant de l'enroulement secondaire de transfert de signaux.
